# EUROPÄISCHE PATENTSCHRIFT

(11) **EP 0 677 540 B1**
(45) Veröffentlichungstag und Bekanntmachung des Hinweises auf die Patenterteilung: **27.01.1999**
(21) Anmeldenummer: 95105077.2
(22) Anmeldetag: 05.04.1995
(51) Int. Cl.: C08G 18/20

(54) **Verfahren zur Herstellung von Polyurethan-Schaumstoffen in Gegenwart von Aminoalkyl- oder Aminophenyl-imidazolen als Katalysator sowie die Verwendung dieser Katalysatoren zur Herstellung von Polyisocyanat-polyadditionsprodukten**
Process for the preparation of polyurethane foams in the presence of amino alkyl or aminophenyl imidazoles as catalysts, as well as the use of these catalysts for the preparation of polyisocyanate-polyaddition products
Procédé pour la préparation de mousses de polyuréthane en présence d'imidazoles d'aminoalkyle ou d'aminophényle comme catalyseur ainsi que l'utilisation de ces catalyseurs pour la préparation de produits d'addition de polyisocyanate

(30) Priorität: 13.04.1994 DE 4412677
(43) Veröffentlichungstag der Anmeldung: 18.10.1995
(73) Patentinhaber: BASF AKTIENGESELLSCHAFT, 67056 Ludwigshafen (DE)
(72) Erfinder: Bruchmann, Bernd, Dr., D-67069 Ludwigshafen (DE); Zschiesche, Ruth, Dr., D-68199 Mannheim (DE); Lutter, Heinz-Dieter, Dr., D-69151 Neckargemünd (DE); Spang, Claudia, Dr., D-67304 Eisenberg (DE); Hinz, Werner, Dr., D-67227 Frankenthal (DE)

(56) Entgegenhaltungen:
- EP-A- 0 451 826
- DE-A- 4 030 515
- FR-A- 2 085 965
- US-A- 4 517 313

## Beschreibung

Gegenstand der Erfindung ist ein Verfahren zur Herstellung von Polyurethan-Schaumstoffen, vorzugsweise Polyurethan-Weichschaumstoffen, mit verminderten Foggingwerten durch Umsetzung von organischen und/oder modifizierten organischen Polyisocyanaten (a) mit höhermolekularen Polyhydroxylverbindungen (b) und gegebenenfalls niedermolekularen Kettenverlängerungs- und/oder Vernetzungsmitteln (c) in Gegenwart von Treibmitteln (d), Aminoalkyl- oder Aminophenyl-imidazolen, insbesondere gegebenenfalls zusätzlich am Imidazolring substituierten 1-(3-Aminopropyl)-imidazolen, als Katalysatoren (e) und gegebenenfalls Zusatzstoffen (f).

Gegenstand der Erfindung ist ferner die Verwendung derartiger Aminoalkyl- oder Aminophenyl-imidazole als Katalysator zur Herstellung von Polyisocyanat-polyadditionsprodukten.

Verfahren zur Herstellung von Polyurethan (PU)-Schaumstoffen, wie z.B. PU-Weich-, -Halbhart- oder -Hartschaumstoffen, in offenen oder geschlossenen Formwerkzeugen oder der entsprechenden PU-Integralschaumstoffe durch Umsetzung von organischen und/oder modifizierten organischen Polyisocyanaten mit höhermolekularen Verbindungen mit mindestens zwei reaktiven Wasserstoffatomen und gegebenenfalls Kettenverlängerungs- und/oder Vernetzungsmitteln in Gegenwart von Treibmitteln, Katalysatoren und gegebenenfalls Zusatzstoffen sind bekannt und werden in zahlreichen Literatur- und Patentpublikationen beschrieben. Eine zusammenfassende Übersicht über die Herstellung von PU-Schaumstoffen wird z.B. in Kunststoff-Handbuch, Band VII, "Polyurethane", 1. Auflage, 1966, herausgegeben von Dr. R. Vieweg und Dr. A. Höchtlen und 2. Auflage, 1983, herausgegeben von Dr. G. Oertel (Carl Hanser Verlag, München) gegeben.

Zur Beschleunigung der Umsetzung zwischen den gegebenenfalls modifizierten organischen Polyisocyanaten und den Verbindungen mit reaktiven Wasserstoffatomen, vorzugsweise Polyhydroxylverbindungen, wird der Reaktionsmischung zweckmäßigerweise mindestens ein Katalysator hinzugefügt.

Als Katalysatoren bewährt haben sich beispleisweise tertiäre Amine wie z.B. Dimethylbenzylamin, Dicyclohexylmethylamin, Dimethylcyclohexylamin, N,N,N',N'-Tetramethyldiamino-diethylether, N,N,N',N'-Tetramethyl-butandiamin, N,N,N',N", N"-Pentamethyl-diethylen-triamin, Bis-(dimethylaminopropyl)-harnstoff, l-Azabicyclo-(2,2,0)-octan, 1,4-Diaza-bicyclo-(2.2.2)-octan (Triethylendiamin, DABCO®), Di-(4-dimethylaminocyclohexyl)-methan, N,N',N"-Tris-(dialkylaminoalkyl)-hexahydrotriazine, z.B. N,N',N''-Tris-(dimethylaminopropyl)-s-hexahydrotriazin, N-Methyl- bzw. N-Ethylmorpholin, Dimethylpiperazin, Dimethylaminoethylpiperidin und gegebenenfalls substituierte Imidazole.

Nach Angaben der DE-A-24 34 185 (US 4.006.124) finden als Katalysatoren zur Herstellung von Polyisocyanat-polyadditionsprodukten Amidin-Metall-Komplexe Verwendung, die als Amidine N-Alkyl-imidazole, wie N-Methyl- oder N-Butylimidazol aufweisen können. N-Alkyl-2-methylimidazole werden in der DE-A-41 16 562 als geeignete Härtungskatalysatoren für Urethanprepolymere mit einem Isocyanatgehalt von 8 bis 20 Gew.-% genannt. 1,2-Dimethylimidazol ist gemäß US-A-4 431 753 Bestandteil einer Katalysatorkombination zur Herstellung von PU-Elastomeren und PU-Schaumstoffen. 1,2,4,5-Tetraalkylimidazole sind starke Basen und nach Angaben der DE-A-21 61 770 wirksame Katalysatoren zur Herstellung von Polyurethanen. Zur Herstellung von flexiblen PU-Schaumstoffen durch Umsetzung von Isocyanatprepolymeren und mit Isocyanatgruppen reaktiven Zusammensetzungen, die mindestens 50 Gew.-% Wasser enthalten, beschreibt die EP-A-0 566 247 als geeignete Katalysatoren 1,2-Dialkylimidazole mit 1 bis 4 Kohlenstoffatomen im Alkylrest. N-substituierte Imidazole, wie z.B. N-Alkyl-, N-Benzyl-, N-Vinyl-, N-Dimethylaminopropylimidazole werden in der EP-A-0 451 826 als Katalysatoren zur Herstellung von flexiblen PU-Schaumstoffen genannt.

Derartige tertiären Amine und Imidazole zeichnen sich durch eine gute katalytische Wirksamkeit aus. Nachteilig ist jedoch, daß sie vielfach relativ leicht flüchtig und geruchsintensiv sind und häufig aus dem Polyadditionsprodukt migrieren. In den durch Fogging in Automobilen auf Windschutzscheiben gebildeten Filmen und Belägen konnten insbesondere tertiäre Amine als Bestandteil analytisch nachgewiesen werden. Aufgrund dieser Analysenergebnisse wurden für die Automobilindustrie sehr strenge Grenzwerte für das "Fogging" aus Polyurethan-Formteilen festgelegt. Die Foggingwerte müssen kleiner sein als der Grenzwert von maximal 1 mg Kondensat, gemessen nach DIN 75 201, Verfahren B. Dieser summarische Wert ergibt sich aus den Einzelwerten für die flüchtigen Bestandteile in den Polyisocyanaten und den NCO-reaktiven Verbindungen, Stabilisatoren, wie z.B. Silikonen, und Katalysatorsystemen.

Zur Reduzierung der Migration des Katalysators aus dem PU-Formteil und dessen Geruch fanden Katalysatoren Verwendung, die mit NCO-Gruppen reaktive Reste aufweisen, mit Isocyanatgruppen reagieren und in die Polyurethanmatrix eingebunden werden können, z.B. N-unsubstituierte Imidazole, beispielsweise 1-H-Imidazol oder 2-Methylimidazol. Derartige Imidazole reagieren mit Isocyanatgruppen zu Harnstoffen, die jedoch thermisch labil sind und in die Ausgangskomponenten zurückspalten können. Das hierbei zurückgebildete Imidazol ist in diesem Stadium wieder migrierfähig. Diese Reaktion bildet die Grundlage zur Herstellung von Imidazolharnstoffen, die nach US-A-4 041 019 als durch Hitze aktivierbare PU-Katalysatoren verwendet werden oder als verkappte Isocyanate eingesetzt werden können.

Bekannt ist auch die Verwendung von Hydroxylgruppen enthaltenden Imidazolen zur Verminderung des Geruchs von PU-Schaumstoffen. N-Hydroxyalkyl substituierte Imidazole als PU-Katalysatoren werden beispielsweise in der US-A-3 448 065 beschrieben. In der EP-A-0 451 826 wird als PU-Katalysator zur Herstellung von flexiblen PU-Schaumstoffen u.a. N-Hydroxyalkylimidazol mit 1 bis 3 Kohlenstoffatomen im Alkylrest genannt. Nachteilig an derartigen Katalysatoren ist u.a., daß sie als monofunktionelle Verbindungen potentielle Kettenabbrecher für die Polyisocyanatpolyadditionsreaktion sind und Urethane bilden. Urethane dieser Struktur sind jedoch unter den in der Reaktionsmischung vorliegenden Herstellungsbedingungen katalytisch, insbesondere bei erhöhten Temperaturen, in die Ausgangskomponenten rückspaltbar und daher aus dem Polyurethan migrierfähig.

Die Aufgabe der vorliegenden Erfindung bestand darin, Polyurethan-Schaumstoffe in Gegenwart von Katalysatoren oder Katalysatorsystemen herzustellen, die, ohne Verminderung ihrer katalytischen Wirksamkeit, keine oder eine nur geringere Flüchtigkeit besitzen.

Diese Aufgabe konnte überraschenderweise durch die Verwendung von Aminoalkyl- oder Aminophenyl-imidazolen als PU-Katalysator gelöst werden.

Gegenstand der Erfindung ist daher ein Verfahren zur Herstellung von PU-Schaumstoffen durch Umsetzung von
a) organischen Polyisocyanaten, modifizierten organischen Polyisocyanaten oder Mischungen aus organischen und modifizierten organischen Polyisocyanaten mit
b) höhermolekularen Polyhydroxylverbindungen mit einer Funktionalität von zwei bis vier reaktiven Wasserstoffatomen und einem Molekulargewicht von 500 bis 8500 und
c) gegebenenfalls mehrwertigen Alkoholen, mit Molekulargewichten kleiner als 480, als niedermolekulare Kettenverlängerungsmitteln, Vernetzungsmittel oder Mischungen aus Kettenverlängerungs- und Vernetzungsmitteln
in Gegenwart von
d) Treibmitteln,
e) Katalysatoren und
f) gegebenenfalls Zusatzstoffen,
das dadurch gekennzeichnet ist, daß man als Katalysatoren (e) Aminoalkyl- oder Aminophenyl-imidazole der Formeln 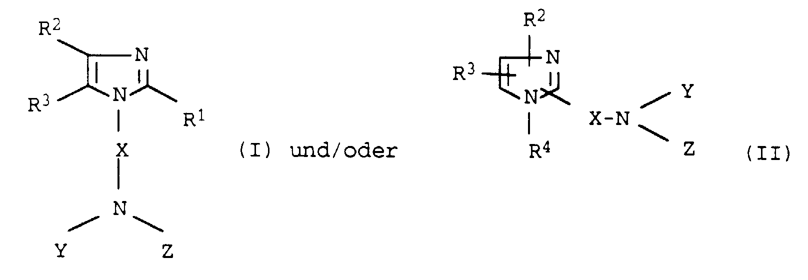 verwendet, in denen bedeuten
- R¹,R²,R³: gleiche oder verschiedene Reste aus der Gruppe der linearen oder verzweigten Alkylreste mit 1 bis 10 Kohlenstoffatomen, vorzugsweise 1 bis 4 Kohlenstoffatomen und insbesondere 1 bis 2 Kohlenstoffatomen,
der Alkoxyreste mit 1 bis 4 Kohlenstoffatomen, vorzugsweise 1 bis 2 Kohlenstoffatomen,
der N-Mono- und N,N-Dialkylaminoreste mit 1 bis 4 Kohlenstoffatomen, vorzugsweise 1 bis 2 Kohlenstoffatomen im Alkylrest,
der N-Mono- und N,N-Dialkylaminoalkylenreste mit 1 bis 4 Kohlenstoffatomen, vorzugsweise 1 bis 2 Kohlenstoffatomen im Alkylrest und 2 bis 4 Kohlenstoffatomen, vorzugsweise 2 bis 3 Kohlenstoffatomen im Alkylenrest,
den Phenylrest, Halogen oder Wasserstoff,
- R⁴: gleich R¹ mit Ausnahme des Halogens und des Alkoxyrestes,
- X: einen Alkylenrest mit 2 bis 6 Kohlenstoffatomen, vorzugsweise 3 bis 4 Kohlenstoffatomen oder einen Phenylenrest,
- Y: Wasserstoff, einen Hydroxyalkylrest mit 2 bis 4 Kohlenstoffatomen, vorzugsweise 2 bis 3 Kohlenstoffatomen oder einen Hydroxypolyoxyalkylenrest mit 2 bis 20 Alkylenoxideinheiten, vorzugsweise 2 bis 10 Alkylenoxideinheiten und
- Z: Wasserstoff, einen Alkylrest mit 1 bis 4 Kohlenstoffatomen, vorzugsweise 1 bis 2 Kohlenstoffatomen, den Phenylrest, einen Hydroxyalkylrest mit 2 bis 4 Kohlenstoffatomen, vorzugsweise 2 bis 3 Kohlenstoffatomen oder einen Hydroxypolyoxyalkylenrest mit 2 bis 20 Alkylenoxideneinheiten, vorzugsweise 2 bis 10 Alkylenoxideinheiten.

Ein anderer Gegenstand der Erfindung betrifft die Verwendung von Aminoalkyl- oder Aminophenyl-imidazolen der Formeln 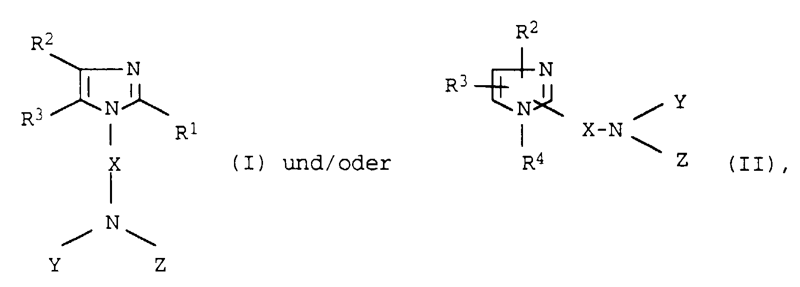 in denen R¹, R², R³, R⁴, X, Y und Z die obengenannte Bedeutung haben, als Katalysatoren zur Herstellung von Polyisocyanat-polyadditionsprodukten.

Durch die Verwendung der erfindungsgemäßen Aminoalkyl- oder Aminophenyl-imidazole können die vorgenannten Nachteile vermieden oder zumindest vermindert werden.

Durch die Umsetzung der Aminoalkyl- oder Aminophenylgruppen mit Polyisocyanaten werden stabile Harnstoffgruppen gebildet, die unter den bei der Schaumbildung auftretenden Reaktionsbedingungen nicht in die Ausgangskomponenten zurückgespalten werden. Die gebildeten Harnstoffgruppen können in Folgereaktionen in Biuretgruppen enthaltende Additionsprodukte, die ihrerseits zwei freie Isocyanatgruppen gebunden enthalten, übergeführt werden. Durch die Bildung von difunktionellen Additionsprodukten wird die Polyadditionsreaktion nicht gestört und die katalytische Wirksamkeit des Imidazolrestes bleibt unverändert erhalten.

Die erfindungsgemäß verwendbaren N,N-Di-(hydroxyalkyl)aminoalkyl- oder N,N-Di-(hydroxypolyoxyalkylen)aminoalkyl- oder -phenylimidazole besitzen zwei katalytisch wirksame Zentren, nämlich die tertiäre Aminogruppe und den Imidazolrest. Selbst bei einer Rückspaltung dieser mit Polyisocyanaten gebildeten Urethanbindungen ist die Molmasse der erfindungsgemäß verwendbaren PU-Katalysatoren so hoch, daß die Dihydroxyverbindungen praktisch nicht aus dem Polyurethan ausdiffundieren und zum Fogging beitragen.

Zur Herstellung der Polyisocyanat-polyadditionsprodukte, vorzugsweise der PU-Schaumstoffe und insbesondere der PU-Weichschaumstoffe nach dem erfindungsgemäßen Verfahren, finden, mit Ausnahme der Katalysatoren (e), die an sich bekannten Aufbaukomponenten (a) bis (c), Treibmittel (d) und gegebenenfalls Zusatzstoffe (f) Verwendung, zu denen folgendes ausgeführt werden kann.

Als organische Polyisocyanate (a) kommen z.B. aliphatische, cycloaliphatische, araliphatische und vorzugsweise aromatische mehrwertige Isocyanate in Frage.

Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylendiisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische und vorzugsweise aromatischen Di- und Polyisocyanate, wie z.B. 4,4'-Diisocyanato-diphenyl-ethan-1,2, 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylen-diisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylenglykolen, Trialkylenglykolen oder Polyoxyalkylen-glykolen mit Molekulargewichten bis 8500 modifiziertes 4,4'-Diphenylmethan-diisocyanat oder 2,4- bzw. 2,6-Toluylen-diisocyanat, wobei als Di- bzw. Polyoxyalkylen-glykole, die einzeln oder als Gemische eingesetzt werden können, beispielsweise genannt seien: Diethylen-, Dipropylen-, Polyoxyethylen-, Polyoxypropylen- und Polyoxypropylen-polyoxyethylen-glykole. Geeignet sind auch NCO-Gruppen enthaltende Prepolymere mit NCO-Gehalten von 30 bis 9 Gew.-%, vorzugsweise von 21 bis 14 Gew.-%, bezogen auf das Gesamtgewicht, hergestellt aus den nachfolgend beschriebenen Polyester- und/oder vorzugsweise Polyether-polyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige Carbodiimidgruppen und/oder Isocyanuratringe enthaltende Polyisocyanate mit NCO-Gehalten von 33,6 bis 15 Gew.-%, vorzugsweise 31 bis 21 Gew.-%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.

Die modifizierten Polyisocyanate können miteinander oder mit unmodifizierten organischen Polyisocyanaten, wie z.B. 2,4'-, 4,4'-Diphenylmethan-diisocyanat, Roh-MDI, 2,4- und/oder 2,6-Toluylen-diisocyanat gegebenenfalls gemischt werden.

Besonders bewährt haben sich als organische Polyisocyanate und kommen daher vorzugsweise zur Herstellung der PU-Schaumstoffe, insbesondere PU-Weichschaumstoffe zur Anwendung: NCO-Gruppen enthaltende Prepolymere mit einem NCO-Gehalt von 30 bis 9 Gew.-%, insbesondere auf Basis von Polyether- oder Polyester-polyolen und einem oder mehreren Diphenylmethan-diisocyanat-Isomeren, vorteilhafterweise 4,4'-Diphenylmethan-diisocyanat und/oder modifizierte Urethangruppen enthaltende organische Polyisocyanate mit einem NCO-Gehalt von 33,6 bis 15 Gew.-%, insbesondere auf Basis von 4,4'-Diphenylmethan-diisocyanat oder Diphenylmethan-diisocyanat-Isomerengemischen, Mischungen aus 2,4- und 2,6-Toluylen-diisocyanaten, Mischungen aus Toluylen-diisocyanaten und Roh-MDI oder insbesondere Mischungen aus den vorgenannten Prepolymeren auf Basis von Diphenylmethan-diisocyanat-Isomeren und Roh-MDI. Die aromatischen Polyisocyanate, modifizierten aromatischen Polyisocyanate oder Polyisocyanatmischungen besitzen zur Herstellung der PU-Weichschaumstoffe zweckmäßigerweise eine durchschnittliche Funktionalität von 2 bis 2,6, vorzugsweise von 2 bis 2,4.

Als höhermolekulare Polyhydroxylverbindungen b) mit mindestens zwei reaktiven Wasserstoffatomen werden zweckmäßigerweise solche mit einer Funktionalität von 2 bis 4, vorzugsweise 2 bis 3 und insbesondere 2,0 bis 2,6 und einem Molekulargewicht von 500 bis 8500, vorzugsweise von 1500 bis 6500 und insbesondere 1800 bis 5000 verwendet (die Molekulargewichte wurden berechnet mit Hilfe der experimentell gemessenen Hydroxylzahl). Besonders bewährt haben sich Hydroxylverbindungen, ausgewählt aus der Gruppe der Polyether-polyole, Polyester-polyole, Polythioether-polyole, hydroxylgruppenhaltigen Polyesteramide, hydroxylgruppenhaltigen Polyacetale, hydroxylgruppenhaltigen aliphatischen Polycarbonate und polymermodifizierten Polyether-polyole oder Mischungen aus mindestens zwei der genannten Polyole. Vorzugsweise Anwendung finden Polyester-polyole und/oder insbesondere Polyether-polyole.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäure-mono- und/oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35:35 bis 50:20 bis 32 Gew.-Teilen, und insbesondere Adipinsäure. Beispiele für zwei- und mehrwertige Alkohole, insbesondere Diole und Alkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. E-Caprolacton oder Hydroxycarbonsäuren, z.B. ω-Hydroxycapronsäure.

Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.

Die erhaltenen Polyester-polyole besitzen vorzugsweise eine Funktionalität von 2 bis 3, insbesondere 2 bis 2,6 und ein Molekulargewicht von 500 bis 3600, vorzugsweise 1500 bis 3000 und insbesondere 1800 bis 2500 und können, sofern dies zur Bildung foggingarmer Polyisocyanat-polyadditionsprodukte vorteilhaft ist, einer nochmaligen Reinigung, z.B. durch Destillation unter vermindertem Druck in einem Dünnschichtverdampfer oder Fallstromverdampfer, unterworfen werden.

Insbesondere als Polyhydroxylverbindungen verwendet werden jedoch Polyether-polyole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat, als Katalysatoren und unter Zusatz mindestens eines Startermoleküls das 2 bis 4, vorzugsweise 2 oder 3 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin und Trialkanolamine, wie z.B. Triethanolamin und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan und Pentaerythrit.

Die Polyether-polyole, vorzugsweise Polyoxypropylen- und Polyoxypropylen-polyoxyethylen-polyole, besitzen eine Funktionalität von vorzugsweise 2 bis 3 und insbesondere 2,0 bis 2,6 und Molekulargewicht von 500 bis 8500, vorzugsweise von 2200 bis 6500 und geeignete Polyoxytetramethylen-glykole ein Molekulargewicht bis ungefähr 4500, vorzugsweise von 650 bis 2200.

Als Polyether-polyole eignen sich ferner polymermodifizierte Polyetherpolyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltende Polyurethane und/oder Melamin und z.B. beschrieben werden in der EP-B-011 752 (US 4 304 708), US-A-4 374 209 und DE-A-32 31 497.

Die Polyether-polyole können ebenso wie die Polyester-polyole einzeln oder in Form von Mischungen verwendet werden. Ferner können sie mit den polymermodifizierten Polyether-polyolen oder Polyester-polyolen sowie den hydroxylgruppenhaltigen Polyesteramiden, Polyacetalen und/oder Polycarbonaten gemischt werden.

Als hydroxylgruppenhaltige Polyacetale kommen z.B. die aus Glykolen, wie Diethylenglykol, Triethylenglykol, 4,4'-Dihydroxy-ethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzen von Diolen, wie Propandiol-1,3, Butandiol-1,4 und/oder Hexandiol-1,6, Diethylenglykol, Trioxyethylenglykol oder Tetraoxyethylenglykol mit Dialkylcarbonaten, z.B. Diethylcarbonat, Diarylcarbonaten, z.B. Diphenylcarbonat, oder Phosgen hergestellt werden können.

Zu den hydroxylgruppenhaltigen Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnen, vorwiegend linearen Kondensate.

Die Polyisocyanat-polyadditionsprodukte und vorzugsweise PU-Schaumstoffe, insbesondere PU-Weichschaumstoffe können ohne oder unter Mitverwendung von Kettenverlängerungs- und/oder Vernetzungsmitteln (c) hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden niedermolekulare, mehrwertige Alkohole, vorzugsweise Diole und/ oder Triole, mit Molekulargewichten kleiner als 480, vorzugsweise von 60 bis 300. In Betracht kommen beispielsweise als Kettenverlängerungsmittel aliphatische, cycloaliphatische und/oder araliphatische Diole mit 2 bis 14 Kohlenstoffatomen, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,3, Butandiol-1,4, Hexandiol-1,6 und Bis-(2-hydroxyethyl)-hydrochinon und als Vernetzungsmittel, Triole, wie z.B. 1,2,4-, 1,3,5-Trihydroxycyclohexan, Trimethylolethan, Glycerin und Trimethylol-propan. Geeignete Kettenverlängerungs- bzw. Vernetzungmittel sind ferner niedermolekulare hydroxylgruppenhaltige Polyalkylenoxide, z.B. mit Molekulargewichten bis 480, auf Basis Ethylen- und/oder 1,2-Propylenoxid und den vorgenannten Diolen bzw. Triolen als Startermoleküle.

Insbesondere Anwendung finden als Kettenverlängerungsmittel Ethylenglykol, Butandiol-1,3, Butandiol-1,4, Hexandiol-1,6 sowie Mischungen aus mindestens zwei der genannten Diole.

Sofern die Verbindungen der Komponente (c) mitverwendet werden, können diese in Form von Mischungen oder einzeln eingesetzt werden und werden vorteilhafterweise in Mengen von 1 bis 40 Gew.-Teilen, vorzugsweise von 5 bis 20 Gew.-Teilen, bezogen auf 100 Gew.-Teile der höhermolekularen Polyhydroxylverbindungen (b), angewandt.

Die höhermolekularen Polyhydroxylverbindungen mit mindestens 2 reaktiven Wasserstoffatomen (b) oder Mischungen aus (b) und niedermolekularen Kettenverlängerungs- und/oder Vernetzungsmitteln (c) zur Herstellung der PU-Schaumstoffe besitzen vorteilhafterweise eine Hydroxylzahl von kleiner als 300 mg KOH/g, vorzugsweise von kleiner als 280 mg KOH/g und insbesondere von 28 bis 200 mg KOH/g.

Als Treibmittel (d) findet vorzugsweise Wasser Verwendung, das mit den organischen, gegebenenfalls modifizierten Polyisocyanaten (a) unter Bildung von Kohlendioxid und Harnstoffgruppen reagiert und dadurch die Druckfestigkeit der Endprodukte beeinflußt. Zur Erzielung des gewunschten Raumgewichts wird das Wasser üblicherweise in Mengen von 0,05 bis 6 Gew.-%, vorzugsweise von 0,1 bis 5 Gew.-%, bezogen auf das Gewicht der Aufbaukomponente (a) bis (c) verwendet.

Als Treibmittel (d) können anstelle von Wasser oder vorzugsweise in Kombination mit Wasser auch niedrigsiedende Flüssigkeiten, die unter dem Einfluß der exothermen Polyadditionsreaktion verdampfen und vorteilhafterweise einen Siedepunkt unter Normaldruck im Bereich von -40 bis 90°C, vorzugsweise von 10 bis 50°C besitzen, oder Gase eingesetzt werden.

Die als Treibmittel geeigneten Flüssigkeiten der oben genannten Art und Gase können z.B. ausgewählt werden aus der Gruppe der Alkane wie z.B. Propan, n- und iso-Butan, n- und iso-Pentan und vorzugsweise der technischen Pentangemische, Cycloalkane wie z.B. Cyclobutan, Cyclopenten, Cyclohexen und vorzugsweise Cyclopentan und/oder Cyclohexan, Dialkylether, wie z.B. Dimethylether, Methylethylether und Diethylether, Cycloalkylenether, wie z.B. Furan, Ketone, wie z.B. Aceton, Methylethylketon, Carbonsäureester, wie Ethylacetat und Methylformiat, Carbonsäuren wie Ameisensäure, Essigsäure und Propionsäure, Fluoralkane, die in der Troposphäre abgebaut werden und deshalb für die Ozonschicht unschädlich sind, wie z.B. Trifluormethan, Difluormethan, Difluorethan, Tetrafluorethan und Heptafluorethan und Gase, wie z.B. Stickstoff, Kohlenmonoxid und Edelgase wie z.B. Helium, Neon und Krypton.

Die zweckmäßigste Menge an niedrigsiedender Flüssigkeit und Gase, die jeweils einzeln als Flüssigkeits- oder Gasmischungen oder als Gasflüssigkeitsgemische eingesetzt werden können, hängt ab von der Dichte, die man erreichen will und der eingesetzten Menge Wasser. Die erforderlichen Mengen können durch einfache Handversuche leicht ermittelt werden. Zufriedenstellende Ergebnisse liefern üblicherweise Flüssigkeitsmengen von 0,5 bis 20 Gew.-Teilen, vorzugsweise von 2 bis 10 Gew.-Teilen und Gasmengen von 0,01 bis 30 Gew.-Teilen, vorzugsweise von 2 bis 20 Gew.-Teilen, jeweils bezogen auf 100 Gew.-Teile der Komponente (b) und gegebenenfalls (c).

Als Treibmittel (d) vorzugsweise verwendet werden Wasser, Alkane mit 3 bis 7 Kohlenstoffatome, Cycloalkane mit 4 bis 7 Kohlenstoffatome oder Mischung aus mindestens zwei der als bevorzugte Treibmittel genannten Verbindungen.

Als Treibmittel keine Anwendung finden, wie bereits ausgeführt wurde, Perfluorchlorkohlenwasserstoffe.

Wie bereits dargelegt wurde, finden als Katalysatoren (e) zur Herstellung der Polyisocyanat-polyadditionsprodukte und vorzugsweise zur Herstellung von PU-Schaumstoffen, insbesondere PU-Weichschaumstoffen nach dem erfindungsgemäßen Verfahren Aminoalkyl- oder Aminophenyl-imidazole der Formeln (I) und/oder (II) Verwendung 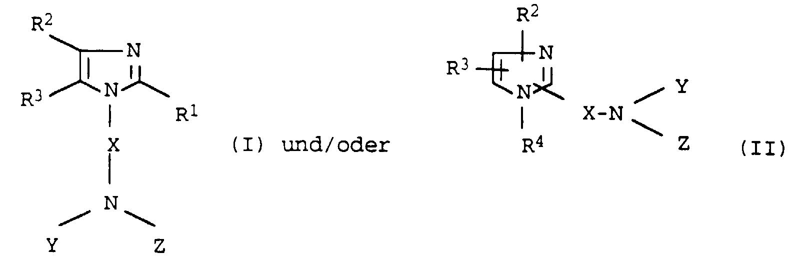 wobei die Gruppen R¹, R², R³, R⁴, X, Y und Z die vorgenannte Bedeutung besitzen. Sofern die Gruppen R¹, R², R³, R⁴, Y und Z aus Alkylgruppen mit 1 bis 10 bzw. 1 bis 4 Kohlenstoffatomen bestehen, seien hierfür beispielhaft genannt der n- und iso-Propyl-, n- und sek. Butyl-, Amyl-, Hexyl-, 2,2-Dimethyl-hexyl-, 2,2,4-Trimethylhexyl-, Heptyl-, Octyl-, 2-Ethyl-octyl-, Decyl- und vorzugsweise der Methyl- und Ethylrest, als Alkoxyreste eignen sich beispielsweise der n- und iso-Propoxy-, n-Butoxy- und vorzugsweise der Methoxy- und Ethoxyrest. Beispielhaft genannt seien als Hydroxyalkylrest mit 2 bis 4 Kohlenstoffatomen der 4-Hydroxybutyl-, 2-Hydroxybutyl-, 3-Hydroxybutyl- und vorzugsweise der 2-Hydroxyethyl- und 2-Hydroxypropylrest und als Hydroxypolyoxyalkylenreste z.B. Hydroxylgruppen aufweisende Polyoxyethylen-, Polyoxypropylen-, Polyoxybutylen-, Polyoxyethylen-polyoxypropylen-, Polyoxybutylen-polyoxypropylen- und Polyoxybutylen-polyoxyethylenrest. Als Alkylenreste X beispielhaft genannt seien der Ethylen-, Propylen-, Butylen-, Pentamethylen- und Hexamethylenrest, wobei Alkylenreste mit 3 und mehr Kohlenstoffatomen, insbesondere der Propylen- und Butylenrest, bevorzugt sind.

Erfindungsgemäße Katalysatoren sind z.B. 4-Chlor-2,5-dimethyl-1-(N-methylaminoethyl)-imidazol, 2-Aminopropyl-4,5-dimethoxy-1-methylimidazol, 1-Aminopropyl-2,4,5-tributylimidazol, l-Aminoethyl-4-hexylimidazol und 1-Aminobutyl-2,5-dimethylimidazol.

Vorzugsweise Verwendung finden die gegebenenfalls am Imidazolring substituierten 1-(3-Aminopropylimidazole, wie z.B. 1-(3-Aminopropyl)-2-methylimidazol, 1-(3-Aminopropyl)-2-ethyl-4-methylimidazol, das N,N-Ethoxylierungsprodukt, hergestellt aus 1 Mol 1-(3-Aminopropyl)-2-methylimidazol und 2 bis 20 Molen, insbesondere 10 Molen Ethylenoxid und insbesondere 1-(3-Aminopropyl)imidazol.

Als PU-Katalysatoren werden gemäß der Erfindung vorzugsweise ausschließlich Aminophenyl- oder insbesondere Aminoalkyl-imidazole der Formeln (I) und/oder (II) verwendet. Die erfindungsgemäß verwendbaren Aminoalkyl- und/oder Aminophenyl-imidazole können jedoch auch in Kombination mit anderen Polyurethankatalysatoren eingesetzt werden. Geeignete Kombinationen können beispielsweise aus Aminoalkyl- oder Aminophenyl-imidazolen und organischen Metallverbindungen, vorzugsweise organischen Zinnverbindungen, wie Zinn-(II)salzen von organischen Carbonsäuren, z.B. Zinn-(II)-diacetat, Zinn-(II)-dioctoat, Zinn-(II)-diethylhexoat und Zinn-(II)-dilaurat und Dialkylzinn-(IV)-salzen von organischen Carbonsäuren, z.B. Dibutyl-zinndiacetat, Dibutylzinn-dilaurat, Dibutylzinn-maleat und Dioctylzinn-diacetat, bestehen.

Nach einer anderen Ausführungsform können die erfindungsgemäß verwendbaren Aminoalkyl- oder Aminophenyl-imidazole mit stark basischen Aminen gemischt als Katalysatoren verwendet werden. Als stark basische Amine in Betracht kommen beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N'-N'-Tetramethylethylendiamin, N,N,N',N'-Tetramethyl-butandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin.

Die erfindungsgemäßen Aminophenyl-imidazole, vorzugsweise Aminoalkyl-imidazole oder Mischungen aus Aminophenyl- und Aminoalkylimidazolen können beispielsweise in Mengen von 0,1 bis 10 Gew.-%, vorzugsweise von 0,5 bis 5 Gew.-% und insbesondere von 0,6 bis 2 Gew.-%, bezogen auf das Gewicht der Polyhydroxylverbindungen (b) verwendet werden. Sofern die Aminophenyl- und/ oder Aminoalkyl-imidazole mit anderen PU-Katalysatoren, insbesondere den vorgenannten organischen Metallverbindungen und/ oder stark basischen Aminen, kombiniert werden, liegen die eingesetzten Mengen für die Katalysatorkombination üblicherweise ebenfalls im vorgenannten Mengenbereich.

Zur Herstellung der PU-Schaumstoffe, vorzugsweise PU-Weichschaumstoffe nach dem erfindungsgemäßen Verfahren können gegebenenfalls Zusatzstoffe (f) Verwendung finden. Als derartige Zusatzstoffe seien beispielsweise genannt: oberflächenaktive Substanzen, Schaumstabilisatoren, Zellregler, Gleitmittel, Füllstoffe, Farbstoffe, Pigmente, Flammschutzmittel, Hydrolyseschutzmittel, fungistatisch und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.

Als Gleitmittel hat sich der Zusatz eines Ricinolsäurepolyesters mit einem Molekulargewicht von 1500 bis 3500, vorzugsweise von 2000 bis 3000 besonders bewährt, der zweckmäßigerweise in einer Menge von 0,5 bis 10 Gew.-%, vorzugsweise 5 bis 8 Gew.-%, bezogen auf das Gewicht der Komponente (b) oder der Komponenten (b) und (c) eingesetzt wird.

Als Füllstoffe, insbesondere verstärkend wirkende Füllstoffe, sind z.B. die an sich bekannten, üblichen organischen und anorganischen Füllstoffe, Verstärkungsmittel und Beschwerungsmittel zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), einverleibt.

Geeignete Flammschutzmittel sind beispielsweise Trikresylphosphat, Tris-(-2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel, wie roter Phosphor, Blähgraphit, Aluminiumoxidhydrat, Antimontrioxid, Arsenoxid, Ammoniumpolyphosphat, Ammoniumsulfat und Calciumsulfat oder Cyanursäurederivate, wie z.B. Melamin und Dicyan-diamid, oder Mischungen aus mindestens zwei Flammschutzmitteln, wie z.B. Blähgraphit und Ammoniumpolyphosphat, Ammoniumpolyphosphaten und Melamin sowie gegebenenfalls Blähgraphit oder Stärke zum Flammfestmachen der PU-Weichschaumstoffe verwendet werden. Im allgemeinen hat es sich als zweckmäßig erwiesen, 2 bis 50 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.

Nähere Angaben über die oben genannten anderen Zusatzstoffe sind er Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der PU-Schaumstoffe können die organischen, gegebenenfalls modifizierten Polyisocyanate (a), höhermolekularen Polyhydroxylverbindungen mit mindestens zwei reaktiven Wasserstoffatomen (b) und gegebenenfalls niedermolekularen Kettenverlängerungs- und/oder Vernetzungsmittel (c) in solchen Mengen zur Umsetzung gebracht werden, daß das Äquivalenz-Verhältnis von NCO-Gruppen der Polyisocyanate (a) zur Summe der reaktiven Wasserstoffatome der Komponenten (b) und gegebenenfalls (c) 0,70 bis 1,50:1, vorzugsweise 0,85 bis 1,15:1 und insbesondere 0,9 bis 1,1:1 beträgt.

Die PU-Schaumstoffe können nach dem Prepolymer oder vorzugsweise nach dem one shot-Verfahren mit Hilfe der Niederdruck-Technik oder der Hochdrucktechnik in offenen oder geschlossenen, zweckmäßigerweise temperierbaren Formwerkzeugen, beispielsweise metallischen Formwerkzeugen, z.B. aus Aluminium, Gußeisen oder Stahl, oder Formwerkzeugen aus faserverstärkten Polyester- oder Epoxidformmassen hergestellt werden.

Als besonders vorteilhaft hat es sich erwiesen, nach dem Zweikomponenten-Verfahren zur arbeiten und die Aufbaukomponenten (b), (d), (e) und gegebenenfalls (c) und (f) in der Komponente (A) zu vereinigen und als Komponente (B) die organischen Polyisocyanate, modifizierten Polyisocyanate (a) oder Mischungen aus den genannten Polyisocyanaten und gegebenenfalls Treibmittel (d) zu verwenden.

Die Ausgangskomponenten werden üblicherweise bei einer Temperatur von 15 bis 80°C, vorzugsweise von 25 bis 55°C gemischt und können drucklos in ein offenes Formwerkzeug oder gegebenenfalls unter erhöhtem Druck in ein geschlossenes Formwerkzeug eingebracht werden. Die Vermischung kann mechanisch mittels eines Rührers oder einer Rückschnecke oder unter hohem Druck im sogenannten Gegenstrominjektionsverfahren durchgeführt werden. Die Formwerkzeugtemperatur beträgt zweckmäßigerweise 20 bis 120°C, vorzugsweise 30 bis 80°C und insbesondere 45 bis 60°C. Werden z.B. PU-Schaumstoff-Formkörper unter Verdichtung hergestellt, liegen die Verdichtungsgrade üblicherweise im Bereich von 1,1 bis 8,3, vorzugsweise von 2 bis 7 und insbesondere von 2,4 bis 4,5.

Die Menge des in das Formwerkzeug eingebrachten Reaktionsgemisches wird vorteilhafterweise so bemessen, daß die erhaltenen Formkörper eine Gesamtdichte von 0,03 bis 0,9 g/cm³, vorzugsweise von 0,03 bis 0,7 g/cm³ besitzen. Die PU-Schaumstoffe können auch nach dem Blockschaumverfahren hergestellt werden. Die Blockschaumstoffe besitzen üblicherweise Dichten von 0,02 bis 0,06 g/cm³.

Die nach dem erfindungsgemäßen Verfahren hergestellten Blockschaumstoffe und PU-(Weich)schaumstoff-Formkörper finden beispielsweise Verwendung in der Kraftfahrzeugindustrie, z.B. als Armlehnen, Kopfstützen und Sicherheitsverkleidungen im Kraft fahrzeuginnenraum, sowie als Fahrrad- oder Motorradsattel, Schuhsohlen und als Innenschuh für Skistiefel. Sie eignen sich ferner als Polstermaterialien in der Möbel industrie und Automobilindustrie.

### Beispiele

### Herstellung von PU-Weichschaumstoffen

### Beispiele 1 bis 4 und Vergleichsbeispiele I und II

### A-Komponente: Mischung, bestehend aus

| | |
|---|---|
| 97,5 Gew.-Teilen | eines mit Glycerin gestarteten Polyoxypropylen(86 Gew.-%)-polyoxyethylen(14 Gew.-%)-polyols mit einem Molekulargewicht von 6000, |
| 2,0 Gew.-Teilen | Wasser und |
| p Gew.-Teilen | eines Katalysators. |

### B-Komponente: Mischung, bestehend aus

| | |
|---|---|
| 40 Gew.-Teilen | eines Quasiprepolymeren mit einem NCO-Gehalt von 23 Gew.-%, hergestellt durch Umsetzung einer Mischung aus 2,4'- und 4,4'-Diphenylmethan-diisocyanat und eines mit Glycerin gestarteten Polyoxypropylen(90 Gew.-%)-polyoxyethylen (10 Gew.-%)-polyols mit einem Molekulargewicht von 3000 und |
| | |
| 60 Gew.-Teilen | einer Mischung, die enthielt, bezogen auf das Gesamtgewicht, 43,3 Gew.-% Diphenylmethan-diisocyanat-Isomere und 56,7 Gew.-% höherkondensierten Polyphenyl-polymethylen-polyisocyanate. |

Zur Herstellung der PU-Weichschaumstoffe wurden 100 Gew.-Teile der A-Komponente und 40,9 Gew.-Teile der B-Komponente, entsprechend einem Isocyanatindex von 100, bei 23°C intensiv gemischt und die erhaltene Reaktionsmischung in einen offenen Polyethyleneimer eingefüllt und dort frei aufschäumen und aushärten gelassen.

Die in der A-Komponente enthaltenen Katalysatoren und die eingesetzten -mengen sowie die an den hergestellten PU-Weichschaumstoffen gemessenen Foggingwerte nach DIN 75 201, Verfahren B werden in der nachfolgenden Tabelle 1 genannt.

**Tabelle 1**

| Zusammenfassung der in den Beispielen 1 bis 4 und Vergleichsbeispielen I und II verwendeten Katalysatoren und -mengen p sowie die an den hergestellten PU-Weichschaumstoffen gemessenen Foggingwerte | | | | |
|---|---|---|---|---|
| Beispiel | Vergl.-Bsp. | Katalysator | | Foggingwert [mg] |
| | | Art | Menge p [Gew.-Teile] | |
| 1 | - | 1-(3-Aminopropyl)imidazol) | 0,56 | 0,03 |
| 2 | - | 1-(3-Aminopropyl)-2-methylimidazol | 0,62 | 0,13 |
| 3 | - | 1-(3-Aminopropyl)-2-ethyl-4-methylimidazol | 0,75 | 0,12 |
| 4 | - | 1-(-3-Aminopropyl)-2-methylimidazol mit 10 Ethylenoxideinheiten | 0,75 | 0,17 |
| - | I | 1,4-Diaza-bicylo-(2,2,2)octan | 0,50 | 0,27 |
| - | II | 1-(2-Hydroxypropyl)-2-methylimidazol | 0,60 | 0,16 |

### Beispiele 5 bis 7 und Vergleichsbeispiele III und IV

A-Komponente: Mischung, bestehend aus

| | |
|---|---|
| 65,63 Gew.-Teilen | eines mit Glycerin gestarten Polyoxypropylen(86 Gew.-%)-polyoxyethylen(14 Gew.-%)-polyols mit einem Molekulargewicht von 6000, |
| 27,40 Gew.-Teilen | eines mit wäßrigem Glycerin gestarteten Polyoxypropylen(94 Gew.-%)-polyoxyethylen(6 Gew.-%)-polyols mit einer Funktionalität von 2,1 und einem Molekulargewicht von 3900, |
| 2,00 Gew.-Teilen | eines mit Glycerin gestarteten Polyoxypropylen (25 Gew.-%)-polyoxyethylen(75 Gew.-%)-polyols mit einem Molekulargewicht von 4000, |
| 0,50 Gew.-Teilen | Diethanolamin, |
| 0,12 Gew.-Teilen | einer 70 gew.-%igen Lösung von Bis-(dimethylaminoethyl)ether in Dipropylenglykol, |
| 0,70 Gew.-Teilen | Dimethylaminopropylamin und |
| p Gew.-Teilen | eines Imidazolkatalysators |

### B-Komponente: wie unter Beispiel 1 bis 4 beschrieben.

Zur Herstellung der PU-Weichschaumstoffe wurden 100 Gew.-Teile der A-Komponente und 58 Gew.-Teile der B-Komponente, entsprechend einem Isocyanatindex von 80, bei 23°C intensiv gemischt und die erhaltene Reaktionsmischung in einen Polyethyleneimer eingefüllt und dort frei aufschäumen und aushärten gelassen.

Zur Messung der Foggingwerte nach DIN 75 201, Verfahren B wurden bei sämtlichen Beispielen und Vergleichsbeispielen Formkörper mit gleicher Raumform und Dichte verwendet. Die Dichte der PU-Weichschaumstoffe und damit das Formkörpergewicht bleiben nach DIN 75 201 unberücksichtigt. Die in der nachfolgenden Tabelle 2 genannten Foggingwerte beziehen sich daher auf PU-Weichschaumstoffe mit vergleichbaren Dichten, um eine Vergleichbarkeit zu gewährleisten. In Tabelle 2 genannt werden ferner die verwendeten Katalysatoren und -mengen p

**Tabelle 2**

| Zusammenfassung der in den Beispielen 5 bis 7 und Vergleichsbeispielen III und IV verwendeten Katalysatoren und -mengen p sowie die an den hergestellten PU-Weichschaumstoffen gemessenen Dichten und Foggingwerte | | | | | |
|---|---|---|---|---|---|
| Bsp. | Vergl.-Bsp. | Katalysator | | Dichte [g/l] | Foggingwert [mg] |
| | | Art | Menge p [Gew.-Teile] | | |
| 5 | - | 1-(3-Aminopropyl)imidazol | 0,9 | 50,5 | 0,30 |
| 6 | - | 1-(3-Aminopropyl)-2-methylimidazol | 0,9 | 50,0 | 0,33 |
| 7 | - | 1-(3-Aminopropyl)-2-ethyl-4-methyl imidazol | 0,9 | 49,6 | 0,34 |
| - | III | 1-Methylimidazol | 0,3 | 48,9 | 0,51 |
| - | IV | 1,2-Dimethylimidazol | 0,2 | 48,0 | 0,43 |

Die höheren Foggingwerte der PU-Weichschaumstoffe, hergestellt nach den Beispielen 5 bis 7 (Tabelle 2) im Vergleich zu den Beispielen 1 bis 3 (Tabelle 1) zeigen, daß die mitverwendeten nicht erfindungsgemäßen tertiären Aminkatalysatoren Bis-(dimethylaminoethyl)ether und Dimethylaminopropylamin zu einer unerwünschten Erhöhung der Foggingwerte beitragen.

Ein Vergleich der Vergleichsbeispiele III und IV mit den Beispielen 5 bis 7 zeigt, daß der Ersatz der nicht erfindungsgemäßen Imidazolkatalysatoren in konventionellen Katalysatorkombinationen durch die erfindungsgemäßen Aminoalkylimidazole zu einer beträchtlichen Verminderung der Foggingwerte führt.

## Patentansprüche

1. Verfahren zur Herstellung von Polyurethan-Schaumstoffen durch Umsetzung von
a) organischen Polyisocyanaten, modifizierten organischen Polyisocyanaten oder Mischungen aus organischen und modifizierten organischen Polyisocyanaten mit
b) höhermolekularen Polyhydroxylverbindungen mit einer Funktionalität von zwei bis vier reaktiven Wasserstoffatomen und einem Molekulargewicht von 500 bis 8500 und
c) gegebenenfalls mehrwertigen Alkoholen, mit Molekulargewichten kleiner als 480, als niedermolekulare Kettenverlängerungsmitteln, Vernetzungsmittel oder Mischungen Kettenverlängerungs- und Vernetzungsmitteln
in Gegenwart von
d) Treibmitteln,
e) Katalysatoren und
f) gegebenenfalls Zusatzstoffen
dadurch gekennzeichnet, daß man als Katalysatoren (e) Aminoalkyl-oderAminophenyl-imidazole der Formeln 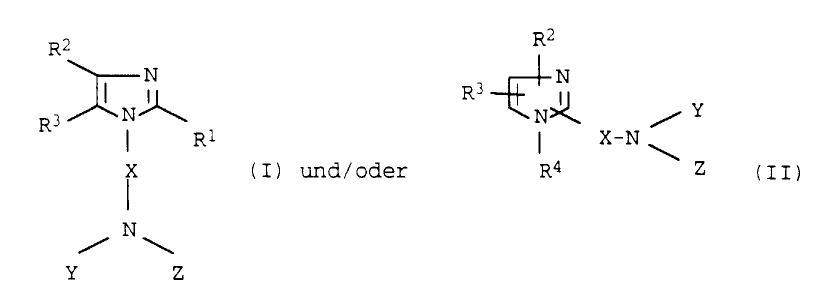 verwendet, in denen bedeuten
R¹,R²,R³ gleiche oder verschiedene Reste aus der Gruppe der linearen oder verzweigten Alkylreste mit 1 bis 10 Kohlenstoffatomen, der Alkoxyreste mit 1 bis 4 Kohlenstoffatomen, der N-Mono- und N,N-Dialkylaminoreste mit 1 bis 4 Kohlenstoffatomen im Alkylrest, der N-Mono- und N,N-Dialkylaminoalkylenreste mit 1 bis 4 Kohlenstoffatomen im Alkylrest und 2 bis 4 Kohlenstoffatomen im Alkylenrest, den Phenylrest, Halogen oder Wasserstoff,
R⁴ gleich R¹ mit Ausnahme des Halogens und Alkoxyrestes,
X einen Alkylenrest mit 2 bis 6 Kohlenstoffatomen oder einen Phenylenrest,
Y Wasserstoff, einen Hydroxyalkylrest mit 2 bis 4 Kohlenstoffatomen oder einen Hydroxypolyoxyalkylenrest mit 2 bis 20 Alkylenoxideinheiten und
Z Wasserstoff, einen Alkylrest mit 1 bis 4 Kohlenstoffatomen, den Phenylrest, einen Hydroxyalkylrest mit 2 bis 4 Kohlenstoffatomen oder einen Hydroxypolyoxyalkylenrest mit 2 bis 20 Alkylenoxideneinheiten.

2. Verfahren nach Anspruch 1, dadurch gekennzeichnet, daß man als Katalysatoren (e) verwendet, 1-(3-Aminopropyl)-imidazol, 1-(3-Aminopropyl)-2-methylimidazol oder 1-(3-Aminopropyl)-2-ethyl-4-methylimidazol.

3. Verfahren nach Anspruch 1 oder 2, dadurch gekennzeichnet, daß man als organische und/oder modifizierte organische Polyisocyanate (a) verwendet: NCO-Gruppen enthaltende Prepolymere mit einem NCO-Gehalt von 30 bis 9 Gew.-% auf Basis von Polyether- oder Polyester-polyolen und einem oder mehreren Diphenylmethan-diisocyanat-Isomeren, modifizierte Urethangruppen enthaltende organische Polyisocyanate mit einem NCO-Gehalt von 33,6 bis 15 Gew.-% auf Basis von 4,4'-Diphenylmethan-diisocyanat oder Diphenylmethan-diisocyanat-Isomerengemischen, Mischungen aus 2,4- und 2,6-Toluylen-diisocyanaten, Mischungen aus Toluylen-diisocyanaten und Roh-MDI oder Mischungen aus den vorgenannten Prepolymeren auf Basis von Diphenylmethan-diisocyanat-Isomeren und Roh-MDI.

4. Verfahren nach einem der Ansprüche 1 bis 3, dadurch gekennzeichnet, daß man als höhermolekulare Polyhydroxylverbindungen Polyether-polyole oder Polyester-polyole mit einer Funktionalität im Bereich von 2,0 bis 4,0 und einem Molekulargewicht von 500 bis 8500 verwendet.

5. Verfahren nach einem der Ansprüche 1 bis 4, dadurch gekennzeichnet, daß man als Treibmittel (d) Wasser, Alkane mit 3 bis 7 Kohlenstoffatomen, Cycloalkane mit 4 bis 7 Kohlenstoffatomen oder Mischungen aus mindestens 2 der genannten Verbindungen verwendet.

6. Verwendung von Aminoalkyl- oder Aminophenyl-imidazolen der Formeln 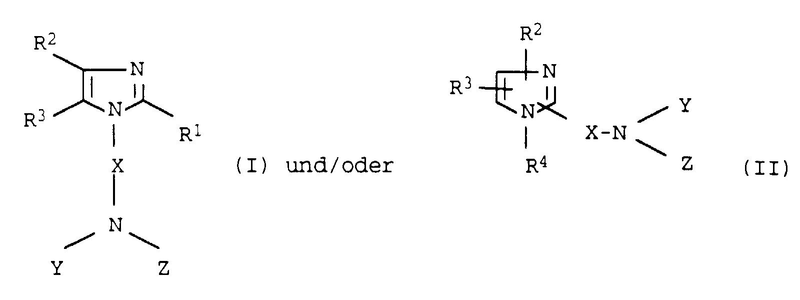 in denen R¹, R², R³, R⁴, X, Y und Z die in Anspruch 1 genannte Bedeutung haben, als Katalysatoren zur Herstellung von Polyisocyanat-polyadditionsprodukten.

7. Verwendung von 1-(3-Aminopropyl)-imidazol, 1-(3-Aminopropyl)-2-methylimidazol oder l-(3-Aminopropyl)-2-ethyl-4-methylimidazol als Katalysatoren zur Herstellung von Polyisocyanat-polyadditionsprodukten.

## Claims

1. A process for the production of polyurethane foams by reacting
a) organic polyisocyanates, modified organic polyisocyanates or mixtures of organic and modified organic polyisocyanates with
b) relatively high-molecular-weight polyhydroxyl compounds having a functionality of from two to four reactive hydrogen atoms and a molecular weight of from 500 to 8,500, and
c) if desired polyhydric alcohols having molecular weights of less than 480 as low-molecular-weight chain extenders, crosslinking agents or mixtures of chain extenders and crosslinking agents,
in the presence of
d) blowing agents,
e) catalysts and
f) if desired additives,
wherein the catalysts (e) used are aminoalkyl- or aminophenylimidazoles of the formula 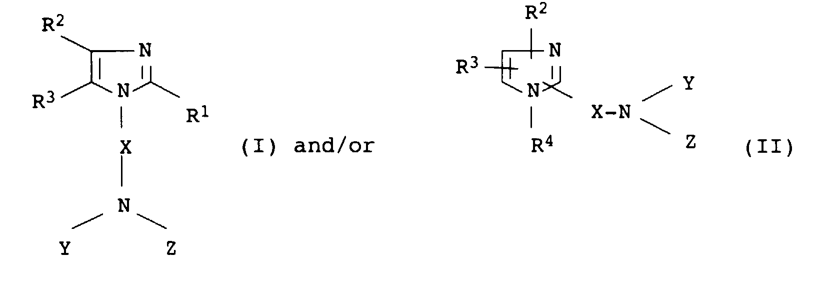 where
R¹,R²,R³ are identical or different radicals from the group consisting of linear or branched alkyl having 1 to 10 carbon atoms, alkoxy having 1 to 4 carbon atoms, N-mono- and N,N-dialkylamino having 1 to 4 carbon atoms in the alkyl moiety, N-mono- and N,N-dialkylaminoalkylene having 1 to 4 carbon atoms in the alkyl moiety and 2 to 4 carbon atoms in the alkylene moiety, phenyl, halogen or hydrogen,
R⁴ is as defined for R^{1,} with the exception of halogen and alkoxy,
X is alkylene having 2 to 6 carbon atoms or phenylene,
Y is hydrogen, hydroxyalkyl having 2 to 4 carbon atoms or hydroxypolyoxyalkylene having 2 to 20 alkylene oxide units and
Z is hydrogen, alkyl having 1 to 4 carbon atoms, phenyl, hydroxyalkyl having 2 to 4 carbon atoms or hydroxypolyoxyalkylene having 2 to 20 alkylene oxide units.

2. A process as claimed in claim 1, wherein the catalysts (e) used are 1-(3-aminopropyl)imidazole, 1-(3-aminopropyl)-2-methylimidazole and 1-(3-aminopropyl)-2-ethyl-4-methylimidazole.

3. A process as claimed in claim 1 or 2, wherein the organic and/or modified organic polyisocyanates (a) used are NCO-containing prepolymers having an NCO content of from 30 to 9 % by weight, based on polyether- or polyester-polyols and one or more diphenylmethane diisocyanate isomers, modified organic polyisocyanates containing urethane groups and having an NCO content of from 33.6 to 15 % by weight based on 4,4'-diphenylmethane diisocyanate or diphenylmethane diisocyanate isomer mixtures, mixtures of 2,4- and 2,6-tolylene diisocyanates, mixtures of tolylene diisocyanates and crude MDI or mixtures of the above prepolymers based on diphenylmethane diisocyanate isomers and crude MDI.

4. A process as claimed in any of claims 1 to 3, wherein the relatively high-molecular-weight polyhydroxyl compounds used are polyether-polyols or polyester-polyols having a functionality in the range from 2.0 to 4.0 and a molecular weight of from 500 to 8,500.

5. A process as claimed in any of claims 1 to 4, wherein the blowing agents (d) used are water, alkanes having 3 to 7 carbon atoms, cycloalkanes having 4 to 7 carbon atoms or mixtures of at least two of said compounds.

6. The use of aminoalkyl- or aminophenylimidazoles of the formula 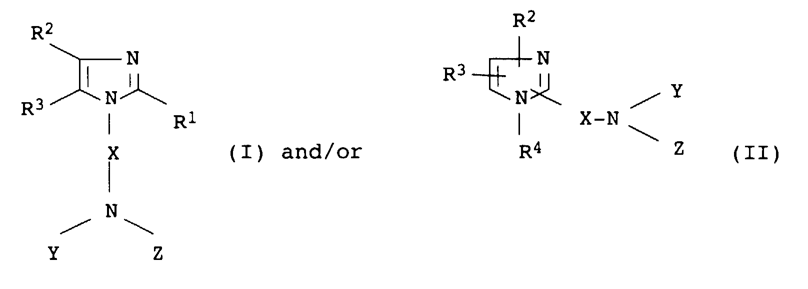 where R¹, R², R³, R⁴, X, Y and Z are as defined in claim 1, as catalysts for the preparation of polyisocyanate polyaddition products.

7. The use of 1-(3-aminopropyl)imidazole, 1-(3-aminopropyl)-2-methylimidazole or 1-(3-aminopropyl)-2-ethyl-4-methylimidazole as a catalyst in the preparation of polyisocyanate polyaddition products.

## Revendications

1. Procédé pour la préparation de mousses de polyuréthanne par mise en réaction de
a) des polyisocyanates organiques, des polyisocyanates organiques modifiés ou encore des mélanges constitués par des polyisocyanates organiques et par des polyisocyanates organiques modifiés avec
b) des composés polyhydroxylés à poids moléculaires élevés possédant une fonctionnalité de 2 à 4 atomes d'hydrogène réactifs et un poids moléculaire de 500 à 8500, et
c) le cas échéant, avec des alcools polyvalents possédant des poids moléculaires inférieurs à 480 à titre d'agents d'allongement de chaînes, d'agents de réticulation ou de mélanges d'agents d'allongement de chaînes et de réticulation à bas poids moléculaires,
en présence de
d) des agents moussants,
e) des catalyseurs et
f) le cas échéant, des additifs,
caractérisé en ce qu'on utilise, à titre de catalyseurs (e), des aminoalkyl- ou des aminophényl-imidazoles répondant aux formules 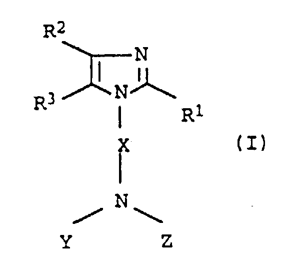 et/ou 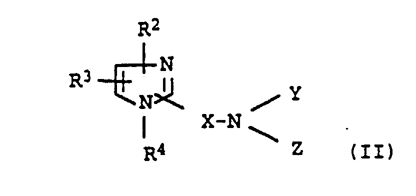 dans lesquelles
R¹, R², R³ représentent des radicaux identiques ou différents choisis parmi le groupe comprenant des radicaux alkyle linéaires ou ramifiés contenant de 1 à 10 atomes de carbone, des radicaux alcoxy contenant de 1 à 4 atomes de carbone, des radicaux N-mono- et N,N-dialkylamino contenant de 1 à 4 atomes de carbone dans le radical alkyle, des radicaux N-mono- et N,N-dialkylaminoalkylène contenant de 1 à 4 atomes de carbone dans le radical alkyle et de 2 à 4 atomes de carbone dans le radical alkylène, le radical phényle, un atome d'halogène ou un atome d'hydrogène,
R⁴ est égal à R¹, à l'exception de l'atome d'halogène et du radical alcoxy,
X représente un radical alkylène contenant de 2 à 6 atomes de carbone ou encore un radical phénylène,
Y représente un atome d'hydrogène, un radical hydroxyalkyle contenant de 2 à 4 atomes de carbone ou encore un radical hydroxypolyoxyalkylène contenant de 2 à 20 unités d'oxydes d'alkylènes, et
Z représente un atome d'hydrogène, un radical alkyle contenant de 1 à 4 atomes de carbone, le radical phényle, un radical hydroxyalkyle contenant de 2 à 4 atomes de carbone ou encore un radical hydroxypolyoxyalkylène contenant de 2 à 20 unités d'oxydes d'alkylènes.

2. Procédé selon la revendication 1, caractérisé en ce qu'on utilise, à titre de catalyseurs (e), le 1-(3-aminopropyl)-imidazole, le 1-(3-aminopropyl)-2-méthylimidazole ou encore le 1-(3-aminopropyl)-2-éthyl-4-méthylimidazole.

3. Procédé selon la revendication 1 ou 2, caractérisé en ce qu'on utilise, à titre de polyisocyanates organiques et/ou organiques modifiés (a): des prépolymères contenant des groupes NCO possédant une teneur NCO de 30 à 9% en poids à base de polyéther- ou de polyester-polyols et d'un ou de plusieurs isomères du diphénylméthane-diisocyanate, des polyisocyanates organiques modifiés contenant des groupes uréthane possédant une teneur NCO de 33,6 à 15% en poids à base du 4,4'-diphénylméthane-diisocyanate ou de mélanges d'isomères du diphénylméthane-diisocyanate, des mélanges de 2,4- et de 2,6-toluylène-diisocyanates, des mélanges de toluylène-diisocyanates et de MDI brut ou encore des mélanges des prépolymères susmentionnés à base d'isomères du diphénylméthane-diisocyanate et de MDI brut.

4. Procédé selon l'une quelconque des revendications 1 à 3, caractérisé en ce qu'on utilise, à titre de composés polyhydroxylés à poids moléculaires élevés, des polyéther-polyols ou des polyester-polyols possédant une fonctionnalité dans le domaine de 2,0 à 4,0 et un poids moléculaire de 500 à 8.500.

5. Procédé selon l'une quelconque des revendications 1 à 4, caractérisé en ce qu'on utilise, à titre d'agents moussants (d), de l'eau, des alcanes contenant de 3 à 7 atomes de carbone, des cycloalcanes contenant de 4 à 7 atomes de carbone ou encore des mélanges d'au moins deux des composés mentionnés.

6. Utilisation d'aminoalkyl- ou d'aminophényl-imidazoles répondant aux formules 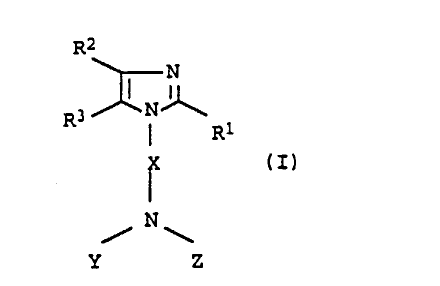 et/ou 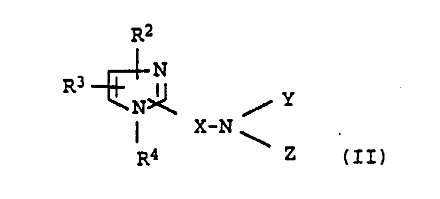 dans lesquelles R¹, R², R³, R⁴, X, Y et Z ont la signification mentionnée à la revendication 1, à titre de catalyseurs pour la préparation de produits de polyaddition de polyisocyanates.

7. Utilisation du 1-(3-aminopropyl)-imidazole, du 1-(3-aminopropyl)-2-méthylimidazole ou du 1-(3-aminopropyl)-2-éthyl-4-méthylimidazole à titre de catalyseurs pour la préparation de produits de polyaddition de polyisocyanates.
